# EUROPEAN PATENT SPECIFICATION

(11) **EP 3 861 082 B1**
(45) Date of publication and mention of the grant of the patent: **01.04.2026**
(21) Application number: 18792721.5
(22) Date of filing: 02.10.2018
(51) Int. Cl.: C09J 7/40, C09D 171/02

(54) **FLEXIBLE RELEASE LINERS AND METHODS FOR MAKING SAME**
FLEXIBLE ABZIEHFOLIEN UND VERFAHREN ZUR HERSTELLUNG DAVON
FEUILLES ANTI-ADHÉSIVES FLEXIBLES ET LEURS PROCÉDÉS DE FABRICATION

(43) Date of publication of application: 11.08.2021
(73) Proprietor: 3M Innovative Properties Company, Saint Paul, Minnesota 55133-3427 (US)
(72) Inventor: CLARK, John C., Saint Paul, Minnesota 55133-3427 (US); IMBERTSON, James R., Saint Paul, Minnesota 55133-3427 (US); MUELLER, Mark E., Saint Paul, Minnesota 55133-3427 (US); SETH, Jayshree, Saint Paul, Minnesota 55133-3427 (US); SPAGNOLA, Joseph C., Saint Paul, Minnesota 55133-3427 (US); VOGEL, Dennis E., Saint Paul, Minnesota 55133-3427 (US); VOGEL, Kim M., Saint Paul, Minnesota 55133-3427 (US)
(74) Representative: Vossius & Partner Patentanwälte Rechtsanwälte mbB
(86) International application number: PCT/US2018/053838
(87) International publication number: WO 2020/072036

(56) References cited:
- US-A1- 2008 315 459

## Description

### FIELD

The present disclosure relates to flexible substrates bearing a release coating, and methods of making the same.

### BACKGROUND

Release liners are used to provide support and protection for adhesives in the form of films or sheets. Low adhesion backsizes (LABs) provide backings for adhesive articles such as tapes. Release liners and LABs desirably adhere sufficiently to the adhesive to keep it in place, especially when the adhesive film or sheet and release liner or LAB are wound into a roll. However, it is also desired that the release liner and LAB will easily separate from the adhesive film or sheet such that there is little or no transfer of material between the release liner or LAB and the adhesive upon separation.

Attaining optimum release surfaces continues to be important, both as release liners for use in the manufacturing, transportation, and delivery of adhesives and as LABs for use in final tape products. Many adhesives cannot be effectively or economically manufactured because of an inability to reliably release them from a surface used to deliver the adhesive, including, for example, jumbo rolls of adhesive films, the interiors of which are subjected to heat, humidity, and pressure. Useful release liners and LABs reproducibly provide an appropriate level of release to the adhesive of interest, do not deleteriously affect the adhesive, and are resistant to aging so the release level remains relatively stable with time. Some adhesive products cannot be economically justified due to the costs of suitable release surfaces they require. There is, then, a continuing need for release surfaces that can economically provide reliable unwind of a roll for a wide variety of adhesives.

US 2008/315459 A1 relates to articles and methods for the replication of microstructures and microfeatures. The articles disclosed therein include a mould with a patterned surface, a metal-containing layer, and a release coating bonded to the surface.

### SUMMARY

The present invention is defined in the appended claims.

Generally, the present application relates to surface coatings for use on flexible substrates to create a low surface energy such that an adhesive applied to the substrate can subsequently be removed without the transfer of material from the substrate to the adhesive or from the adhesive to the substrate. In some embodiments, the coatings provide a surface energy of about 12 dynes/cm (0.012 N/m). More specifically, the present disclosure relates to coatings for release liners and LABs useful in the handling and provision of adhesives. Some embodiments of the present invention provide advantages of low material cost (due to the small amount of material used in the coatings), low potential of having the coating transfer onto the adhesive (because there are low levels of polymers that are not bound to a metal or metal oxide surface layer on the flexible substrate). In some embodiments, the release performance is similar to that of much thicker silicone liners, which function through transfer of loose silicone oils at the interface with the adhesive, which may reduce the adhesive's effectiveness in some applications.

The present invention provides an article comprising a flexible polymer substrate having two major surfaces, a surface layer comprising metal, metal oxide, silicon oxide, or combinations thereof disposed on at least one major surface of the flexible polymer substrate; and a coating disposed on at least one surface layer, wherein the coating comprises a fluorinated polymer bonded to the surface layer; wherein the fluorinated polymer has the following general formula (I) 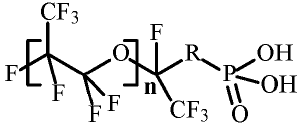 ; and 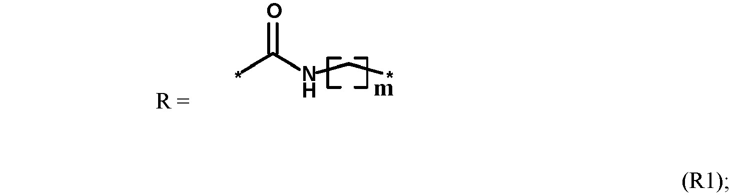 where m = 1 to 25 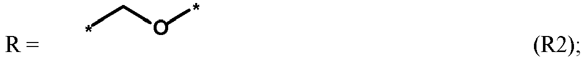 or 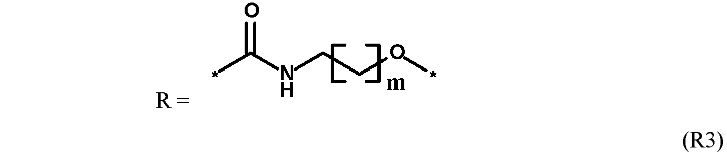 where m = 1 to 25 wherein the article is an adhesive release liner.

The above summary of the present disclosure is not intended to describe each embodiment of the present disclosure. The details of one or more embodiments of the disclosure are also set forth in the description below. Other features, objects, and advantages of the disclosure will be apparent from the description and from the claims.

### DETAILED DESCRIPTION

As used herein, it should be understood that when a layer (or coating) is said to be "formed on" or "disposed on" another layer (or substrate), the layers are understood to be generally parallel to one another, but there may be (although there are not necessarily) intervening layers formed or disposed between those layers. In contrast, "disposed directly on" or "formed directly on" means layers (or a layer and a substrate) are necessarily in direct contact with one another, with no intervening layers (other than possibly a native oxide layer).

As used herein, the term "monolayer" means a single, closely packed layer of atoms or molecules.

As used herein, the term "low adhesion backsize" or "LAB" means a release coating or release material. LABS are typically used as, or on, an adhesive tape backing.

As used herein, the term "hexafluoropropylene oxide" or (HFPO) includes (poly) hexafluoropropylene oxide.

As used herein, the term "flexible" means the ability to bend sufficiently to be processed as an adhesive liner without creasing or cracking.

As used herein, the singular forms "a", "an", and "the" include plural referents unless the content clearly dictates otherwise. As used in this specification and the appended embodiments, the term "or" is generally employed in its sense including "and/or" unless the content clearly dictates otherwise.

As used herein, the recitation of numerical ranges by endpoints includes all numbers subsumed within that range (e.g. 1 to 5 includes 1, 1.5, 2, 2.75, 3, 3.8, 4, and 5).

Unless otherwise indicated, each numerical parameter should at least be construed in light of the number of reported significant digits and by applying ordinary rounding techniques. The article of the present invention is an adhesive release liner.

The flexible substrate is a polymer substrate. Any polymeric material suitable for use as a flexible release liner may be used. Examples of suitable materials include PET, polypropylene, polyethylene, nylon, and polyimide.

The flexible substrate may have smooth or textured major surfaces. Smooth means an R(a) of at most 0.1 microns (0.1 µm) and textured means an R(a) of at least 5 microns (5 µm), wherein R(a) is defined as the arithmetical average value of all absolute distances (peaks and valleys) of the roughness profile from the center line within the measuring length. A rough surface may be a property of the polymeric material comprising the substrate, e.g., created by embossing, microreplication, electroforming, or additives in the polymeric material, or it may be created by the addition of materials to the surface of the polymeric material, e.g., microscopic particles such as microscopic beads embedded in the surface of the polymeric material. A variety of structures could be used to form a textured surface. At least some preferred aspects of a textured surface for a release surface of some embodiments described herein are 1) low contact area, 2) uniform asperity heights, and 3) low surface energy coating.

Textured liners are desirable in some instances because the structure of the texture has the ability to reduce the area of contact with an adhesive film or sheet and thus reduce adhesion at the interface. Textured liners work best with adhesives that do not flow and conform to the structure of the texture, which could cause a physical "locking" of the adhesive with the liner and extremely high peel forces. To prevent or reduce such locking, at least some embodiments of the coating of the present disclosure may be applied to the surface of a textured liner to keep the adhesive from advancing into the structure of the texture. In addition, using only a monolayer of the coating is believed to reduce the ability of the coating to rearrange over time thus limiting the build-up of adhesion forces.

Composite film materials, such as 3M^{™} Crystal Silk^{™} materials, having microscopic glass beads arranged in a monolayer on the surface of, and partially embedded in, a polymer film are suitable as textured flexible polymer substrates. Preferably, the composite materials have uniformity of bead heights. For example, with 3M^{™} Crystal Silk^{™} materials, the heights of all the beads vary less than 5 microns (5 µm) and the standard deviation of bead top heights is around 2.5 microns (2.5 µm). Accordingly, high spots are not created which could result in embedment of beads in an adhesive due to increased pressure from the high spot.

A property (and often an advantage) of liners having a beaded surface is the very low surface contact area. The adhesive meets the liner at the apex of each bead, and because of the curvature of the bead will contact the bead over only a very small contact area. This phenomenon is governed by the rheology of the adhesive, by the pressure exerted joining the adhesive and the liner and by the surface energy of the liner and the resulting contact angle which, for a low surface energy material, prevents advancement over the bead surface. In addition, microscopically textures structures can prevent significant adhesive flow between the asperities, thereby keeping the contact area to a minimum. In some embodiments, major surfaces of the substrate may be subjected to one or more surface preparation processes such as cleaning with water or a chemical solvent, heat treatment, polishing, other surface preparation process, or combinations thereof.

In some embodiments, the flexible substrate has a surface layer deposited on all or a portion of one or both major surfaces.

The surface layer comprises metal, metal oxide, silicon oxide, or a combination thereof. Suitable metals include aluminum, titanium, tungsten, nickel, copper, tin, chromium, chromium containing alloys, and combinations thereof. Suitable metal oxides include aluminum oxide (Al₂O₃), chromium oxide (Cr₂O₃), nickel oxides (NiO, Ni₂O₃), titanium oxide (TiO₂), tungsten oxides (WO₂, WO₃, W₂O₃), copper oxide (CuO), tin oxide (SnO₂), and indium tin oxide (ITO) and combinations thereof. In some embodiments, the surface layer comprises silicon oxide (SiO₂) alone or in combination with a metal or metal oxide.

The surface layer may be deposited by any suitable method including sputtering, vapor coating, or atomic layer deposition (ALD). In some embodiments, the surface layer may comprise sub-layers of different or the same materials. For example, metal may be sputtered in a series of sub-layers. In some embodiments, SiO₂ is deposited by atomic layer deposition. In some embodiments a surface layer having both a metal and metal oxide is formed, e.g., by depositing a metal layer and allowing the metal atoms at the surface of such metal layer to oxidize. In this manner, a surface layer comprising a metal layer with an oxide layer at the surface having a thickness of at least a monolayer may be formed.

The surface layer may be any suitable thickness so long as it does not hinder the flexibility of the article. Preferred thicknesses for the surface layer is from a monolayer to 15 microns (15 µm) or from a monolayer to 20 microns (20 µm).

A coating is deposited on all or a portion of at least one surface layer. In some embodiments, the coating has a low surface energy.

The coating comprises (or is formed of) a fluorinated polymer that bonds to the surface layer on the flexible substrate. The bond may be achieved through coordination attachment, covalent attachment, intermolecular forces such as van der Waals, dipole-dipole, ion dipole, hydrogen bonding, or a combination thereof. In some embodiments, the bond may be formed between the fluorinated polymer and one or more active sites on the surface layer on the flexible substrate. In some embodiments, the coating does not wash off with organic solvents which demonstrates it is chemically bonded to the surface. Preferably the surface layer is cleaned before the coating is applied, to ensure maximum bonding.

The fluorinated polymer in the coating has the following general formula (I): 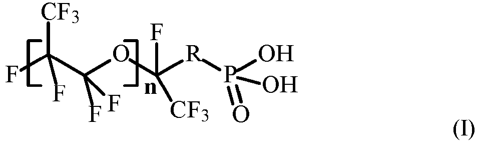 where n = 6 to 120; and 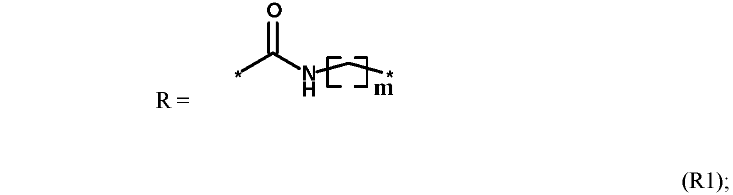 where m = 1 to 25 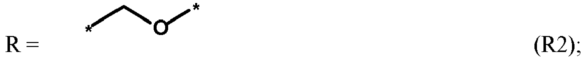 or 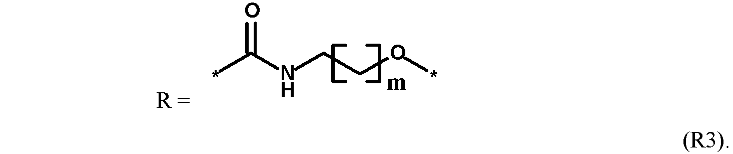 where m = 1 to 25

In some embodiments, the fluorinated polymer may include those fluorinated polymers in which n ranges from 36 to 42. In some embodiments, the fluorinated polymer may include those fluorinated polymers having a number average molecular weight (Mₙ) of 1,000-20,000 or 6,000-7,000 daltons.

In some embodiments, the fluorinated polymer coatings are phosphorus acids of polymers derived from hexafluoropropylene oxide (HFPO) and are self-assembling materials.

Self-assembling materials, as their name implies, spontaneously form a structure (e.g., micelle or monolayer) when they contact another substance. Monolayer formation is particularly useful when it occurs on the surface of a solid substrate (e.g., a layer of metal). If a monolayer is formed from a material that imparts a low surface energy to a surface of a substrate, it can impart adhesive release properties to that surface. Typical self-assembling materials consist of a polar head group attached to a hydrophobic tail. Self-assembling materials having a fluorinated tail typically substantially outperform alternative materials, such as those having a hydrocarbon or silicone tail, for example, in terms of adhesive release. Boardman et al. (U.S. Patent No. 6,824,882) describe the use of fluorinated phosphonic acids in this fashion. The phosphonic acid head group binds to the metal surface while the long alkyl chains align the molecules in a self-assembly and the tail end of the molecule comes to the surface exposing only the fluorochemical portion of the molecule to the surface giving the substrate a low energy surface from what was originally a high energy surface.

In some embodiments, the coating may be disposed on any portion, up to the entirety, of one or both of the surface layer(s). In some embodiments, the coating may be disposed directly on a surface layer. In some embodiments, the coating may have a thickness (i.e., dimension of the coating in a direction that is normal to a major surface) of between 0.1nm and 20nm or between 0.5nm and 5nm. In one preferred embodiment, the coating may be disposed as a monolayer on a surface layer, such that the phosphate groups are bonded to said surface layer. In at least one preferred embodiment, the coating has a substantially uniform thickness. In at least some embodiments, the coating has a uniform thickness regardless of whether the substrate is smooth or textured.

A two-sided liner may be advantageous in many situations such as when an adhesive layer and liner are wound into a roll. In this manner, a release surface contacts both sides of the adhesive layer thereby reducing the chances of adhesive transferring to the liner from either of its major surfaces.

Suitable release properties of the coated substrate can be indicated by contact angles. In some embodiments, advancing contact angles are at least 105°or at least 110°. In some embodiments, receding contact angles are at least 55° or at least 60°.

In some embodiments, once the coating is deposited it is heat treated. Suitable methods of heat treatment include subjecting the coating to a heat lamp or oven at temperatures of about 45 to 100°C for any suitable amount of time including 5 seconds to 15 minutes. In at least some embodiments, it was found that heat treatment could improve the release properties of the coating as indicated by contact angle measurements. In some embodiments having heat treated coatings, advancing contact angles are at least 120°. In some embodiments, receding contact angles are at least 95°. It is noted that contact angle can be negatively affected if the underlying layer is not clean when the coating is applied.

In some embodiments, the fluorinated polymer may be deposited in the form of a solution that includes a solvent and the fluorinated polymer. Suitable solvents include fluorinated fluids, such as hydrofluoroethers, and water. Suitable deposition techniques for the fluorinated polymer (or solvent containing the fluorinated polymer) include physical or chemical vapor deposition, spray coating, dip coating, wipe coating, spin coating, or other known material deposition processes. Following deposition of the fluorinated material, optionally, any remaining solvent may be removed from the substrate.

In some embodiments, once the coating is deposited, and optionally heat treated, an adhesive may be deposited on the coating. Any adhesive having a low adhesion to the coating is suitable for use with the coated flexible substrate. Examples of suitable adhesives include acrylics, silicones, and rubbers. The adhesive may be applied by any suitable method including hot and cold roller coating, lamination, spraying, and casting.

In some embodiments the peel forces between the adhesive and coating are less than 200, 100, or 50 grams/inch (78.74, 39.37, or 19.69 g/cm).
In some embodiments, the readhesions to steel are not less than 30%, 20%, or 10% reduction.

In some embodiments, the release article is clear, i.e., substantially transparent. A clear article might be desired for applications such as an LAB for packaging tape. Many variables, including how a metal or metal oxide layer is deposited (and in what thickness) can influence the transparency level of the release article. In some embodiments, the release article is reflective. A reflective article might be desired for applications involving the use of a laser. For example, a reflective release article would allow for an adhesive on the release layer to be cut by a laser without cutting the release article itself, because the laser beam would be reflected, rather than absorbed, by the release article.

An example of a release article of the present disclosure includes a low surface energy coating of the present disclosure disposed on a flexible substrate having a microscopically rough surface with a low area of contact and a uniformity of asperity heights represented as a standard deviation of less than 5 microns (5 µm), such as a 3M^{™} Crystal Silk^{™} glass beaded film material. The low surface energy coating may be applied as a monolayer to a surface layer, which may be a sputter coated layer of aluminum or titanium on the flexible substrate. The low surface energy coating preferably possess low hysteresis (<20 degrees) with respect to advancing and receding contact angles to water and hexadecane (as measured on a smooth surface) and approach a surface energy of a CF₃ fluorinated material (<15mN/m).

As earlier stated, release surfaces for a variety of adhesives are important during manufacturing processes and in the roll-up of tapes. In some embodiments of the present disclosure, the fluorinated polymer of the coating when bonded to a metal, metal oxide, or silicon dioxide provides extremely low surface energy with substantial durability. The low surface energy coating together with a textured surface of a certain character can have substantial utility in providing stable easy release for a variety of adhesives, especially silicone adhesives which are particularly aggressive and difficult to process.

The operation of the present disclosure will be further described with regard to the following detailed examples. These examples are offered to further illustrate various specific embodiments and techniques. It should be understood, however, that many variations and modifications may be made while remaining within the scope of the present disclosure.

### EXAMPLES

All materials are commercially available, for example from Sigma-Aldrich Chemical Company, Milwaukee, WI, USA, or known to those skilled in the art, unless otherwise stated or apparent.

The following abbreviations are used in this section: mL=milliliters, g=grams, kg=kilograms, cm=centimeters, dm=decimeters, µm=micrometers, mil=thousandths of an inch, or 25.4 µm, wt% = percent by weight, sec=seconds, min=minutes, h=hours, d=days, N=Newtons, NMR=nuclear magnetic resonance, eq=equivalent, M=molar, mmoles=millimoles, °C=degrees Celsius, °F=degrees Farenheit, MW=molecular weight, cpm=centimeters per minute, sccm=standard cubic centimeters per minute, mTorr = milliTorr or 0.133 Pa. Abbreviations for materials used in this section, as well as descriptions of the materials, are provided in Table 1.

### Materials

**Table 1**

| **Material** | **Details** |
|---|---|
| RELEASE 1 | Hexafluoropropylene oxide-phosphate ester, MW 6K, was prepared as described below. |
| RELEASE 2 | Hexafluoropropylene oxide- amidododecylphosphonic acid, MW 6K, was prepared as described below |
| RELEASE 3 | Hexafluoropropylene oxide- Amidol Phosphate, was prepared as described below |
| 11-Bromo-1-undecanol | Available from Sigma Aldrich |
| DMF | Dimethylformamide, available from Sigma Aldrich |
| Potassium phthalimide | Available from Sigma Aldrich |
| Sodium hydroxide | Available from Sigma Aldrich |
| Ethyl acetate | Available from Sigma Aldrich |
| Hydrobromic acid | 45 wt% in acetic acid, available from VWR, Radnor, PA, USA |
| Sulfuric acid | 96 wt%, available from Sigma Aldrich |
| Heptane | Available from Sigma Aldrich |
| Triethyl phosphite | Available from Sigma Aldrich |
| Ethanol | Available from Sigma Aldrich |
| Hydrazine hydrate | Available from Sigma Aldrich |
| Potassium carbonate | Available from Sigma Aldrich |
| Acetone | Available from Sigma Aldrich |
| KRYTOX 157 FSH | Available from The Chemours Company, Wilmington, DE, USA |
| NOVEC 7300 | 1,1,1,2,2,3,4,5,5,5-decafluoro-3-methoxy-4-(trifluoromethyl)-pentane, available under the trade designation 3M NOVEC 7300 ENGINEERED FLUID from 3M Company, Maplewood, MN, USA |
| NOVEC 7200 | Ethoxy-nonafluorobutane, 99.0% minimum, available under the trade designation 3M NOVEC 7200 ENGINEERED FLUID from 3M Company |
| Oxalyl chloride | Available from Sigma Aldrich |
| Methanol | Available from Sigma Aldrich |
| Trimethylsilyl bromide | Available from Sigma Aldrich |
| CH₂Cl₂ | Available from Sigma Aldrich |
| Ethanolamine | Available from Sigma Aldrich |
| Triethylamine | Available from Sigma Aldrich |
| Phosphorus oxychloride | Available from Sigma Aldrich |
| Magnesium sulfate | Available from Sigma Aldrich |
| Sodium chloride | Available from Sigma Aldrich |
| MELINEX 453 | 2 mil (50 µm) PET film vapor coated on one side with aluminum metal, available under the trade designation "MELINEX 453" from Tekra, New Berlin, WI, USA |
| IPA | 2-propanol, available from Sigma Aldrich |

### Preparation of 2-(11-hydroxyundecyl)isoindoline-1,3-dione (PRECURSOR 1)

To a mixture of 10.0 g (39.8 mmoles, 1 eq) of 11-bromo-1-undecanol in 175 mL of DMF was added 11.1 g (59.7 mmoles, 1.5 eq) of potassium phthalimide. The mixture was heated to 65 °C for 16 h. The cooled reaction mixture was poured into 500 mL of water and the resulting mixture was filtered. The residue was dissolved in approximately 250 mL of ethyl acetate and washed twice with 100 mL of 10% aqueous sodium hydroxide. The organic phase was then washed four times with 50 mL of water and concentrated in vacuo to give 9.3 g of product, confirmed by ¹³C and ¹H NMR.

### Preparation of 2-(11-Bromoundecyl)isoindole-1,3-dione (PRECURSOR 2)

A solution of 106 g (334 mmoles, 1 eq) of PRECURSOR 1in 600 g of a 45 wt% solution (3340 mmoles, 10 eq) of hydrobromic acid (45 wt%, in acetic acid) was prepared and 27.8 mL of a 18 M solution (501 mmoles, 1.5 eq) of sulfuric acid (18 M, 96 wt%) was added. This caused a slight exotherm but the reaction temperature was allowed to increase without external cooling. The reaction was then heated to 100 °C for 4 h. The mixture was allowed to cool to room temperature. To the reaction mixture was added 550 g of water. This gave a slight exotherm and the mixture was allowed to cool and a precipitate formed. This was stirred overnight and the precipitate was collected by filtration and washed with 8 L of water until the pH of the water phase become greater than 1. The solid was triturated with 320 g of heptane and air dried to give 111 g of product, confirmed by ¹³C and ¹H NMR.

### Preparation of Diethyl (11-(1,3-Dioxoisoindolin-2-yl)undecyl)phosphonate (PRECURSOR 3)

To 110 g (289 mmoles, 1 eq) of PRECURSOR 2 was added 115 g (694 mmoles, 2.4 eq) of triethyl phosphite. The mixture was heated to 150 °C for 18 h. A vacuum was applied (approximately 1 torr or 133 Pa) and the diethyl ethylphosphonate was stripped off (3 h).
The pot residue gave 126 g of product, confirmed by ¹³C and ¹H NMR.

### Preparation of Diethyl (11-Aminoundecyl)phosphonate (PRECURSOR 4)

To a solution of 126 g (288 mmoles, 1 eq) of PRECURSOR 3 in 720 mL of ethanol was added 23.1 g (461 mmoles, 1.6 eq) of hydrazine hydrate. This mixture was heated to 78 °C for 1.5 h and a solid precipitated. The mixture was filtered and the residue was washed with ethanol. The combined filtrates (approximately 2 L) were concentrated. The crude product was dissolved in 400 mL of ethyl acetate and washed with 350 mL of water. The organic phase was washed twice with 250 mL of a 0.5 M solution of aqueous potassium carbonate and concentrated. The residue was treated with 200 mL of acetone and then with 100 mL of water. The mixture became homogenous and was stripped in vacuo. The residue was the desired product, confirmed by ¹³C and ¹H NMR.

### Preparation of HFPO methyl ester 6K (PRECURSOR 5)

To a 3 L round bottom flask equipped with a condenser, heating mantel, and temperature probe, was added 500 g (83.3 mmoles, 1 eq) of KRYTOX 157 FS (H) 6K, 496 g (1417 mmoles, 17 eq) of NOVEC 7300, and 47.6 g (375.0 mmoles, 4.5 eq) of oxalyl chloride. There was a slight exotherm on the addition of oxalyl chloride and the solution began to effervesce. The mixture was heated to 65 °C - 70 °C. The appearance changed from a colorless oil to a light yellow cloudy solution. The mixture was heated for 2 h and then to 85 °C for 1 h. The mixture was then heated to 100 °C to distill off the oxalyl chloride. The reaction mixture indicated no oxalyl chloride was present. The reaction was cooled to 50 °C and 123 g of methanol was added and heated at 50 °C overnight. The reaction mixture was concentrated in vacuo at 40 °C for several hours. The final product was 97.4 wt% with the remainder NOVEC 7300, confirmed by ¹³C and ¹H NMR.

### Preparation of Diethyl (12-HFPO-amidododecylphosphonate) (PRECURSOR 6)

A mixture of 2.00 g (0.00153 moles, 1 eq) of PRECURSOR 5 and 0.500 g (0.00156 moles, 1.014 eq) PRECURSOR 4 was stirred at room temperature with no solvent to give a white-milky mixture. This mixture was heated to 55 °C for 2 h to produce the desired product, confirmed by ¹³C and ¹H NMR.

### Preparation of HFPO-Phosphate Ester MW 6K. (RELEASE 1)

To a mixture of 0.256 g (1.67 mmoles, 2 eq) of phosphorus oxychloride in 5.00 mL of NOVEC 7200 cooled with an ice bath was added 15.0 g of a 33.3 wt% solution (0.8333 mmoles, 1 eq) of 33.3 wt% HFPO-alcohol 6K in NOVEC 7200. HFPO-alcohol 6K can be prepared by reduction of PRECURSOR 5 using sodium borohydride. To this was added 0.169 g (1.67 mmoles, 2 eq) of triethylamine. This mixture was stirred for 2 h at room temperature and then quenched with 5.00 g of water and stirred overnight. More water was added and 100 g of NOVEC 7200 followed by 50 mL of IPA. The organic phase was washed with more water. This was a slow phase split. The organic phase was concentrated in vacuo to give the desired product.

### Preparation of 12-HFPO-amidododecylphosphonic acid (RELEASE 2)

A mixture of 2.40 g (1.51 mmoles, 1 eq) of PRECURSOR 6 and 2.31 g (15.1 mmoles, 10 eq) of trimethylsilyl bromide was stirred in 15 mL of CH₂Cl₂ at room temperature overnight. The reaction mixture slowly became homogeneous. To this mixture was added 4.83 g of methanol. The reaction mixture exothermed to about 26 °C and was allowed to stir overnight. The residue was stirred with water. The water was poured off and more water was added. This mixture was stirred overnight and the water poured off. The residue was a white semisolid, confirmed by ¹³C and ¹H NMR.

### Preparation of HFPO-Amidol Phosphate 6K (RELEASE 3)

A mixture of 6.00 g (1.00 mmoles, 1 eq) of PRECURSOR 5 and 0.0611 g (1.00 mmoles, 1 eq) of ethanolamine was heated to 100 °C for 24 h. A second eq of ethanolamine was added and the mixture heated to 100 °C for 1.5 h. This mixture was heated to 40 °C and 0.202 g (2.00 mmoles, 2 eq) of triethylamine was added followed by 0.307 g (2.00 mmoles, 2 eq) of phosphorus oxychloride. The mixture was heated at 40 °C for 2 h. To the reaction mixture was added 4 mL of water and heated to 55 °C overnight. To this mixture was added 30 mL of NOVEC 7200 followed by a saturated solution of sodium chloride. The bottom layer was washed a second time with water, then dried with magnesium sulfate and concentrated to give 3.5 g of the desired product, confirmed by ¹³C and ¹H NMR.

### Application of Release Materials (including surface preparation)

### Preparation A:

For Examples 4 and 5, monolayer release materials RELEASE 2 and RELEASE 1, respectively, were applied to the aluminum coated side of MELINEX 453 from 0.1% solutions in NOVEC 7200 and excess rinsed off with NOVEC 7200.

### Preparation B:

For Examples 6 and 9, monolayer release materials RELEASE 1 and RELEASE 3, respectively, were applied to the aluminum coated side of MELINEX 453 by dipping 3 sec in 0.1% solutions in NOVEC 7200 and rinsing off excess with NOVEC 7200. After allowing to air dry, samples were heated at 70 °C for 15 min.

### Preparation C:

For Example 1, monolayer release material RELEASE 1 was applied to the aluminum coated side of MELINEX 453 after cleaning both sides by rubbing the surface gently with a cloth wet with undiluted cleaner available under the trade designation SIMPLE GREEN from Sunshine Makers, Huntington Beach, CA, rinsing with water and IPA and air drying. RELEASE 1 was then applied by rubbing with a cloth wet with 0.1% Solution of RELEASE 1 in NOVEC 7200.

### Preparation D:

For Examples 2 and 3, MELINEX 453 was coated on the metallized side with RELEASE 1 by applying a 0.1% by weight solution of RELEASE 1 in a NOVEC 7200 solvent using a coating square available under the trade designation AP-B5358 from Paul N. Gardner Inc (Pompano Beach, FL) with nominal thicknesses of 0.5 mil (13 µm) for Example 2 and 1 mil (25 µm) for Example 3 as indicated in Table 2. The coated films were dried and passed through a 27 foot (8.2 m) oven at 50 °C at 3 feet/min (0.9 m/min). A 15 foot (4.6 m) room temperature distance was followed by rolling the film up into a roll.

The amount of material coated was chosen to apply about 1.5 to 3.0 x 10⁻⁶ g/cm² on the film, approximately a monolayer (theoretically calculated to be 1.16 x 10⁻⁶ g/cm²).

### Preparation E:

For Examples 7 and 8, 5 mil (250 µm) polyester, primed by treating with a DC nitrogen plasma discharge (titainum cathode, 200W), was coated on one side with a layer of combined Al₂O₃/SiO₂ oxide of nomincal thickness of approximately 10 nm using Atomic Layer Deposition. The oxide layer was coated with RELEASE 1 by applying a 0.1% by weight solution of RELEASE 1 in a NOVEC 7200 solvent using a coating square available under the trade designation AP-B5358 from Paul N. Gardner Inc (Pompano Beach, FL) at 0.5 mil (13 µm) and 1 mil (25 µm) coating thicknesses creating 2 different films, indicated for Examples 7 and 8 in Table 3. The coated films were dried and heated with a pass through a 27 foot (8.2 m) oven at 50 °C at 3 feet/min (0.9 m/min). A 15 foot (4.6 m) room temperature distance was followed by rolling the film up into a roll. The amount of material coated was chosen to apply about 1.5 to 3.0 x 10⁻⁶ g/cm² on the film, approximately a monolayer (theoretically calculated to be 1.16 x 10⁻⁶ g/cm²).

### Preparation F:

For Example 15, a beaded film surface was made by partially sinking borosilicate glass beads with a diameter distribution of approximately 38 to 75 µm into a waxy transfer liner and then coating over with a reactive polyurethane to create a bead bonding layer as described in Method I in U.S. Patent Application Publication No. US 2015/0010723. After fully reacting, the bead bonding layer was stripped from the transfer liner resulting in transfer of the beads into the bonding layer and a resulting construction with beads protruding above the bead bonding resin. Under ultra-low vacuum conditions; approx. 2.0 x 10⁻⁷ Torr (2.7x10⁻⁵ Pa), Ti was deposited via physical vapor deposition (PVD) using an in-line batch sputtering tool (manufactured by KDF Electronics). Film samples were cut to fit and secured (with doubled-sided adhesive tape) onto a 13"x13" (33 cm x 33 cm) carrier pallet. The pallet was loaded into the vacuum system through the "load lock" chamber. Ti metal was sputtered under DC power at 800W with 100 seem of Ar gas at 8.5 mTorr (1.13 Pa) system pressure. The carrier pallet was passed back and forth through the plasma zone at a rate of 150 cpm for 8 scans. This yielded an approximately 40 nm thick layer of Ti metal. The pallet was then exchanged out via the "load lock" procedure to atmosphere. RELEASE 1 was applied to the titanium surface by rubbing a 0.1% solids solution in NOVEC 7200 onto the surface with a cotton cloth and drying in air.

Topographic measurements were made with a stylus profilometer, available under the trade designation DEKTAK 8 from Veeco Instruments Inc., Tucson, AZ, USA, using settings a 2.5 µm radius tip and 2 mg of force. The topographical maps generated composed of line scans that were 2 mm long in the x-scan direction with 6000 data points collected for each line and 361 of these line scans spread equally over 2 mm in the y-scan direction. Samples were at least 1 cm square, without rough edges and mounted on 1x3" or 3x2" (2.5x7.6 cm or 7.6x5.1cm) microscopy slides, with double-sided permanent tape. Surface roughness (Ra) was determined to be 5.96 µm as determined from the topographic measurement by the instrument software.

### Preparation G:

For Examples 10 through 13 and Comparative Example 14, the procedure described for Preparation B was followed, with the exception that no heat treatment was applied and the concentration of release coating solution was as indicated in Table 2.

**Table 2. Summary of preparation conditions for Examples**

| **Example** | **Coating Solution** | **Substrate** | **Sample Preparation** |
|---|---|---|---|
| EX-1 | 0.1% RELEASE 1 solution in NOVEC 7200 | Al metal vapor coated side of MELINEX 453 | C; clean with SIMPLE GREEN, water, and IPA, air dry; rub with solution |
| EX-2 | 0.1% RELEASE 1 solution in NOVEC 7200 | Al metal vapor coated side of MELINEX 453 | D; Applied to thickness of 0.5 mil (13 µm) with coating square, air dried, heated |
| EX-3 | 0.1% RELEASE 1 solution in NOVEC 7200 | Al metal vapor coated side of MELINEX 453 | D; Applied to thickness of 1 mil (25 µm) with coating square, air dried, heated |
| EX-4 | 0.1% RELEASE 2 solution in NOVEC 7200 | Al metal vapor coated side of MELINEX 453 | A; rub with solution |
| EX-5 | 0.1% RELEASE 1 solution in NOVEC 7200 | Al metal vapor coated side of MELINEX 453 | A; rub with solution |
| EX-6 | 0.1% RELEASE 2 solution in NOVEC 7200 | Al metal vapor coated side of MELINEX 453 | B; Dip coated, rinsed, air dried, heated to 70 °C for 15 min |
| EX-7 | 0.1% RELEASE 1 solution in NOVEC 7200 | Combined Al₂O₃/SiO₂ coated by ALD on 5 mil (127 µm) PET | E; Applied to thickness of 0.5 mil (13 µm) with coating square, air dried, heated |
| EX-8 | 0.1% RELEASE 1 solution in NOVEC 7200 | Combined Al₂O₃/SiO₂, 10 nm nominal thickness, coated by ALD on 5 mil (127 µm) PET | E; Applied to thickness of 1 mil (25 µm) with coating square, air dried, heated |
| EX-9 | 0.1% RELEASE 3 solution in NOVEC 7200 | Al metal vapor coated side of MELINEX 453 | B; Dip coated, rinsed, air dried, heated to 70 °C for 15 min |
| EX-10 | 0.1% RELEASE 1 solution in NOVEC 7200 | Al metal vapor coated side of MELINEX 453 | G; Dip coated, rinsed, air dried |
| EX-11 | 0.075% RELEASE 1 solution in NOVEC 7200 | Al metal vapor coated side of MELINEX 453 | G; Dip coated, rinsed, air dried |
| EX-12 | 0.04% RELEASE 1 solution in NOVEC 7200 | Al metal vapor coated side of MELINEX 453 | G; Dip coated, rinsed, air dried |
| EX-13 | 0.01% RELEASE 1 solution in NOVEC 7200 | Al metal vapor coated side of MELINEX 453 | G; Dip coated, rinsed, air dried |
| C. EX-14 | NOVEC 7200 only | Al metal vapor coated side of MELINEX 453 | G; Dip coated, rinsed, air dried |
| EX-15 | 0.1% RELEASE 1 solution in NOVEC 7200 | Ti metal coated by PVD on textured surface | F; rub with solution |

### Evaluation

### Test Method for Measuring Water Contact Angle of Coated Surfaces

For Example 1, advancing and receding contact angles were measured on a drop shape analyzer instrument available under the trade designation DSA100 from KRÜSS USA, Matthews, NC, USA, with water, with a pump rate of 10 µL/min. Results are summarized in Table 3 for the RELEASE 1 treatments as a function of the treatment type. Measurements were made for three individual samples of Example 1, with average values presented in Table 3. The release performance of these coatings is reflected in the contact angles. A higher contact angle a lower surface energy.

For Examples 2, 3, 7 and 8, the films were tested following the procedure described above, with the additional step of aging samples at room temperature for several d before measuring contact angle with water. For Examples 6 and 9, the procedure described for Example 1 was followed, with the exception that samples were heated at 70 °C in an oven for 15 min prior to testing. Contact angle measurement results are summarized in Table 3, below.

For Examples 10 through 13 and Comparative Example 14 receding contact angle was measured as described for Example 1. Results are summarized in Table 4.

### Test Method for Measuring Peel Force

For Examples 10 through 13 and Comparative Example 14, peel force was measured by dry applying 467MP acrylic transfer tape to glass plates, removing the liner, applying the coated sample to the transfer adhesive, release coated side in contact with the adhesive, rolling with a 1 lb (0.45 kg) roller, aging for 20 min at ambient temperature, and then testing peel force with an M90 peel tester, 180 degrees, 90"/min (229 cm/min). Peel results are presented in Table 4, below.

### Test Method for Measuring Aged Release and Subsequent Adhesion

These tests measured the effectiveness of release liners that had been aged for a period of time at a constant temperature and relative humidity. The aged release value is a quantitative measure of the force required to remove a flexible adhesive tape from the release liner at a specific angle and rate of removal, in the measurements describe here, 90 inch/min (3.8 cm/sec) and 180° unless otherwise indicated. This force is expressed in Newtons per decimeter (N/dm). Unless otherwise noted, one of the following two adhesive tapes was used to measure the aged release value and the subsequent adhesion (sometimes called readhesion) to a stainless steel plate. The peel forces were measured after 1 d (initial), 7 d at room temperature, 7 d at 90 °F (32 °C) and 90% relative humidity and 7 d at 70 °C.

For the Dry Lamination samples, a 50 µm (2.0 mil) primed PET film (product 3SAB from Mitsubishi Polyester Film, Inc., Greer, S.C.) was adhered to one side of acrylic transfer adhesive available under the trade designation 3M^{™} HIGH PERFORMANCE ACRYLIC ADHESIVE 200MP TRANSFER ADHESIVE (3M^{™} Adhesive Transfer Tape 467MP), available from 3M Company, and pulled off to create the test tapes. The adhesive side of the resulting tape was then dry laminated onto the coated side of each sample using two passes of a 2 kg rubber roller.

For the Wet Cast samples, a pre-adhesive prepared as described as for Comparative Example C3 in U.S. Patent No. 9,475,967, with the exception that iso-octyl acrylate was used in place of 2-octyl acrylate, was coated on the prepared surfaces indicated in Table 2 and cured as decribed for Comparative Example C3 in in U.S. Patent No. 9,475,967. 3SAB was then laminated to the cured adhesive to provide a backing for the test samples.

The results are presented in Table 5 and Table 6, below, for dry lamination samples and in Table 7, below, for wet cast samples.

**Table 3. Contact Angle**

| Example | Coating Applied Thickness mils (µm) | Advancing angle, H₂O | Receding angle, H₂O |
|---|---|---|---|
| EX-1 | NM | 122.2 | 104.6 |
| EX-2 | 0.5 (13) | 127.2 | 106 |
| EX-3 | 1 (25) | 125.5 | 102.2 |
| EX-6 | NM | 107.4 | 59.2 |
| EX-7 | 0.5 (13) | 121.6 | 107.2 |
| EX-8 | 1 (25) | 12.6 | 95.4 |
| EX-9 | NM | 120.1 | 113.4 |

| | | | |
|---|---|---|---|
| NM = Not Measured | | | |

The results in Table 3 demonstrate high water contact angles consistent with a low level of polarity on the coated surface.

**Table 4. Receding water contact angle and peel force.**

| Example Number | Concentration (wt%) | Rec H₂O angle | Peel force, g/inch (g/cm) |
|---|---|---|---|
| EX-10 | 0.1 | 117.7 | 16 (6.3) |
| EX-11 | 0.075 | 119 | 11 (4.3) |
| EX-12 | 0.04 | 117.2 | 33.2 (13.1) |
| EX-13 | 0.01 | 47.8 | 106 (41.7) |
| C. EX-14 | 0 | 12.3 | 1564 (615.7) |

The results presented in Table 4 demonstrate an inverse correlation between measured receding contact angle for water and the measured peel force. (wt% in NOVEC 7200) (approximately 2 sec dip followed by rinsing with NOVEC 7200)

**Table 5. Peel force and readhesion to steel, dry laminated**

| Example | Peel Force g/inch (N/dm) | | | Readhesion to Steel Oz/inch (N/dm) | | |
|---|---|---|---|---|---|---|
| | 1dCT | 3 d CT | 7 d CT | 1 d CT | 3 d CT | 7 d CT |
| EX-4 | 27.2 (1.05) | 22.7 (0.876) | 25.9 (1.00) | 30.4 (33.3) | 30.8 (33.70) | 28.8 (31.5) |
| EX-5 | 22.6 (0.872) | 25.2 (0.973) | 27.3 (1.05) | 21.3 (23.3) | 23.0 (25.2) | 24.8 (27.1) |

| | | | | | | |
|---|---|---|---|---|---|---|
| CT = Constant Temperature, Ambient | | | | | | |

**Table 6. Peel force and readhesion to steel, dry laminated, 90"/min/Imass**

| Example | Peel Force | | | Readhesion to Steel | | |
|---|---|---|---|---|---|---|
| | 7 d CT g/in (N/dm) | 7 d 90°F (32 °C)/90% Humidity g/in (N/dm) | 7 d 70 °C g/in (N/dm) | 7d CT oz/in (N/dm) | 7 d 90°F (32 °C)/90% Humidity g/in (N/dm) | 7 d 70 °C oz/in (N/dm) |
| EX-2 | 21.2 (0.818) | 27.5 (1.06) | 17.2 (0.664) | 44.4 (48.6) | 42.3 (46.3) | 42.5 (46.5) |
| EX-3 | 29.4 (1.14) | 24.4 (0.942) | 15.9 (0.614) | 40.3 (44.1) | 41.8 (45.8) | 42.8 (46.8) |
| EX-7 | 21.4 (0.826) | 28.1 (1.08) | 14.8 (0.571) | 44.4 (48.6) | 42.9 (46.9) | 46.4 (50.8) |
| EX-8 | 20.8 (0.803) | 30.1 (1.16) | 14.3 (0.552) | 45.1 (49.4) | 41.7 (45.6) | 46.2 (50.6) |
| EX-15 | 9.9 (0.38) | 8.1 (0.31) | NT | NT | NT | NT |

| | | | | | | |
|---|---|---|---|---|---|---|
| CT = Constant Temperature, Ambient NT = Not Tested | | | | | | |

**Table 7. Peel force and readhesion to steel, wet cast, 90"/min/IMass**

| Example | Peel Force | | | Readhesion to Steel | | |
|---|---|---|---|---|---|---|
| | 7 d CT g/in (N/dm) | 7 d 90°F (32 °C)/90% Humidity g/in (N/dm) | 7 d 70 °C g/in (N/dm) | 7 d CT oz/in (N/dm) | 7 d 90°F (32 °C)/90% Humidity oz/in (N/dm) | 7 d 70 °C oz/in (N/dm) |
| EX-2 | 39.1 (1.51) | 47.8 (1.85) | 30.6 (1.18) | 29.7 (32.5) | 30.1 (32.9) | 37.1 (40.6) |
| EX-3 | 41.6 (1.61) | 49.3 (1.90) | 30.9 (1.19) | 30.6 (33.5) | 30.3 (33.2) | 38.1 (41.7) |
| EX-7 | 26.3 (1.02) | 26.1 (1.01) | 23.4 (0.903) | 31.2 (34.1) | 30.1 (32.9) | 32.8 (35.9) |
| EX-8 | 33.2 (1.28) | 27.5 (1.06) | 22.3 (0.861) | 32.2 (35.2) | 26.7 (29.2) | 35.0 (38.3) |

## Claims

1. An article comprising:
a flexible polymer substrate having two major surfaces,
a surface layer comprising metal, metal oxide, silicon oxide, or combinations thereof disposed on at least one major surface of the flexible polymer substrate; and
a coating disposed on at least one surface layer, wherein the coating comprises a fluorinated polymer bonded to the surface layer;
wherein the fluorinated polymer has the following general formula (I) 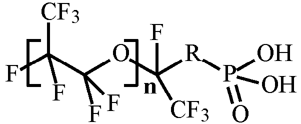
where n = 6 to 120; and 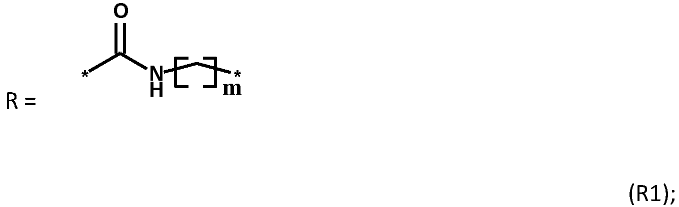 where m = 1 to 25 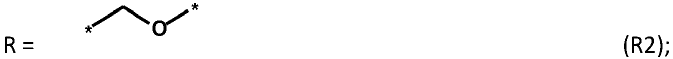 or 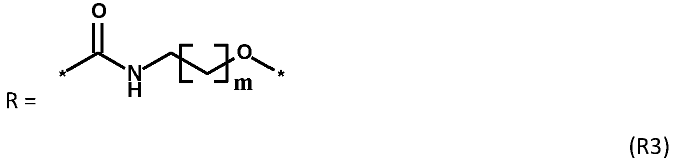 where m = 1 to 25
wherein the article is an adhesive release liner.

2. The article of claim 1 wherein a surface layer is disposed on both major surfaces of the flexible polymer substrate and a coating is disposed on both surface layers.

3. The article of claim 1 wherein the thickness of the surface layer is a monolayer to 15 nanometers.

4. The article of claim 1 wherein the surface layer is selected from the group consisting of aluminum, titanium, nickel, chromium, chromium-containing alloys, aluminum oxide, chromium oxide, nickel oxides, titanium oxide, tungsten oxides, silicon oxide, and combinations thereof.

5. The article of claim 1 wherein the mean average thickness per unit area of the coating is 1 molecule thick.

6. The article of claim 1 wherein at least one major surface of the flexible polymer substrate has a surface roughness (Ra) of at most 0.1 micrometers.

7. The article of claim 1 wherein at least one major surface of the flexible polymer substrate has a surface roughness (Ra) of at least 5 micrometers.

8. The article of claim 7 wherein the surface roughness is created by a layer of partially embedded microspheres.

9. The article of claim 1, wherein the fluorinated polymer includes polymers for which n = 36 to 42.

10. The article of claim 1, wherein the fluorinated polymer has the following formula: 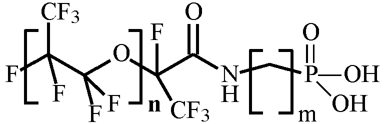 where m=1 to 25 and n = 6 to 120.

11. The article of claim 1, wherein the fluorinated polymer has the following formula: 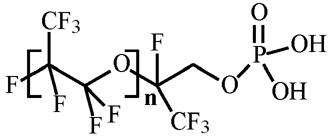 where n = 6 to 120.

12. The article of claim 1, wherein the fluorinated polymer has the following formula: 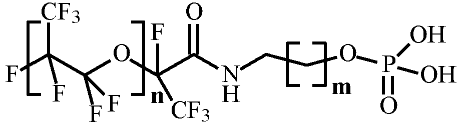 where m=1 to 25 and n = 6 to 120.

13. The article of claim 1, wherein the release liner does not contain silicone.

14. A method of making an article comprising:
providing a flexible polymer substrate having two major surfaces,
depositing a surface layer comprising metal, metal oxide, silicon oxide, or combinations thereof on at least one major surface of the flexible polymer substrate; and
depositing a coating on at least one surface layer, wherein the coating comprises a fluorinated polymer bonded to the surface layer;
wherein the fluorinated polymer has the following general formula (I) 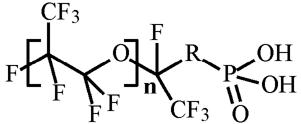
where n = 6 to 120; and 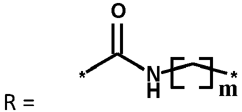 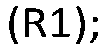 where m = 1 to 25 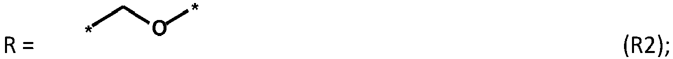 or 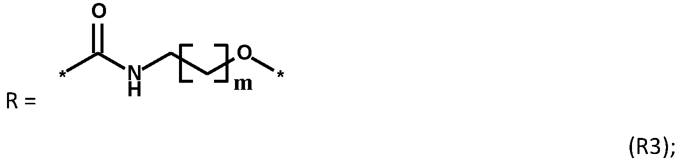 where m = 1 to 25
wherein the article is an adhesive release liner.

15. The method of claim 15, further comprising heating the coating after it is deposited.

## Patentansprüche

1. Ein Gegenstand, umfassend:
ein flexibles Polymersubstrat, das zwei Hauptoberflächen aufweist,
eine Oberflächenschicht, umfassend Metall, Metalloxid, Siliziumoxid oder Kombinationen davon, die auf mindestens einer Hauptfläche des flexiblen Polymersubstrats angeordnet ist; und
eine Beschichtung, die auf mindestens einer Oberflächenschicht angeordnet ist, wobei die Beschichtung ein fluoriertes Polymer, das an die Oberflächenschicht gebunden ist, umfasst;
wobei das fluorierte Polymer die folgende allgemeine Formel (I) aufweist 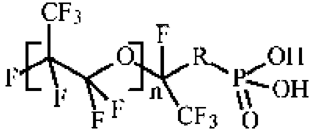
wobei n = 6 bis 120; und 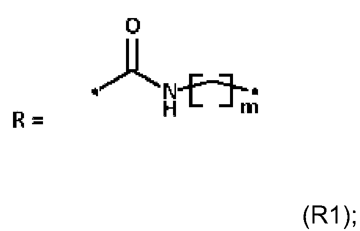 wobei m = 1 to 25 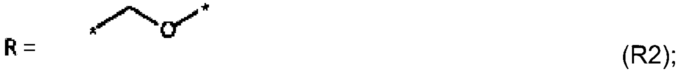 oder 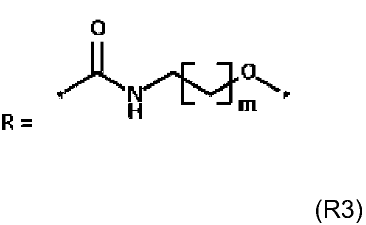 wobei m = 1 to 25
wobei der Gegenstand eine Trennfolie für Klebstoff ist.

2. Der Gegenstand nach Anspruch 1, wobei auf beiden Hauptflächen des flexiblen Polymersubstrats eine Oberflächenschicht angeordnet ist und auf beiden Oberflächenschichten eine Beschichtung angeordnet ist.

3. Der Gegenstand nach Anspruch 1, wobei die Dicke der Oberflächenschicht von einer Monoschicht bis zu 15 Nanometern beträgt.

4. Der Gegenstand nach Anspruch 1, wobei die Oberflächenschicht aus der Gruppe ausgewählt ist, bestehend aus Aluminium, Titan, Nickel, Chrom, chromhaltigen Legierungen, Aluminiumoxid, Chromoxid, Nickeloxiden, Titanoxid, Wolframoxiden, Siliziumoxid und Kombinationen davon.

5. Der Gegenstand nach Anspruch 1, wobei die mittlere durchschnittliche Dicke der Beschichtung pro Flächeneinheit 1 Molekül dick ist.

6. Der Gegenstand nach Anspruch 1, wobei mindestens eine Hauptfläche des flexiblen Polymersubstrats eine Oberflächenrauheit (Ra) von höchstens 0,1 Mikrometern aufweist.

7. Der Gegenstand nach Anspruch 1, wobei mindestens eine Hauptfläche des flexiblen Polymersubstrats eine Oberflächenrauheit (Ra) von mindestens 5 Mikrometern aufweist.

8. Der Gegenstand nach Anspruch 7, wobei die Oberflächenrauheit durch eine Schicht aus teilweise eingebetteten Mikrokugeln erzeugt wird.

9. Der Gegenstand nach Anspruch 1, wobei das fluorierte Polymer Polymere, für die n = 36 bis 42, beinhaltet.

10. Der Gegenstand nach Anspruch 1, wobei das fluorierte Polymer die folgende Formel aufweist: 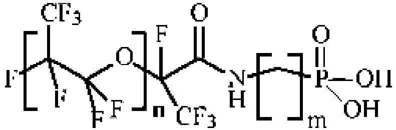 wobei m=1 bis 25 und n = 6 bis 120.

11. Der Gegenstand nach Anspruch 1, wobei das fluorierte Polymer die folgende Formel aufweist: 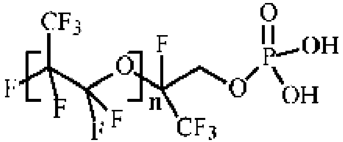 wobei n = 6 bis 120.

12. Der Gegenstand nach Anspruch 1, wobei das fluorierte Polymer die folgende Formel aufweist: 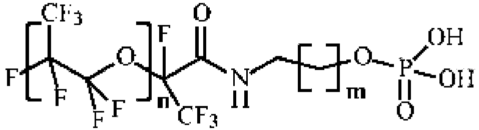 wobei m=1 bis 25 und n = 6 bis 120.

13. Der Gegenstand nach Anspruch 1, wobei die Trennfolie kein Silikon enthält.

14. Ein Verfahren für eine Herstellung eines Gegenstands, umfassend:
Bereitstellen eines flexiblen Polymersubstrats, das zwei Hauptoberflächen aufweist,
Abscheiden einer Oberflächenschicht, umfassend Metall, Metalloxid, Siliziumoxid oder Kombinationen davon, auf mindestens eine Hauptfläche des flexiblen Polymersubstrats; und
Abscheiden einer Beschichtung auf mindestens eine Oberflächenschicht, wobei die Beschichtung ein fluoriertes Polymer, das an die Oberflächenschicht gebunden ist, umfasst;
wobei das fluorierte Polymer die folgende allgemeine Formel (I) aufweist 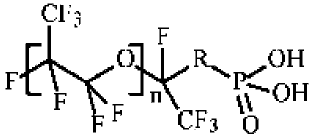
wobei n = 6 bis 120; und 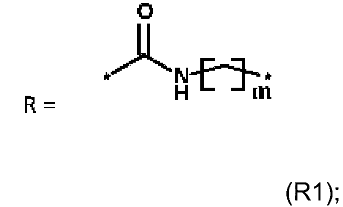 wobei m = 1 to 25 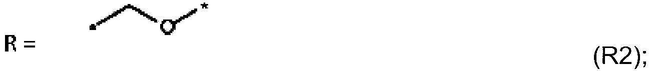 oder 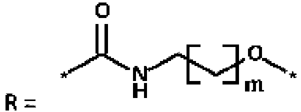 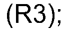 wobei m = 1 to 25
wobei der Gegenstand eine Trennfolie für Klebstoff ist.

15. Das Verfahren nach Anspruch 15, ferner umfassend ein Erwärmen der Beschichtung, nachdem sie abgeschieden ist.

## Revendications

1. Article comprenant :
un substrat polymère souple ayant deux surfaces principales,
une couche de surface comprenant un métal, un oxyde métallique, un oxyde de silicium, ou des combinaisons de ceux-ci, disposée sur au moins une surface principale du substrat polymère souple ; et
un revêtement disposé sur au moins une couche de surface, dans lequel le revêtement comprend un polymère fluoré lié à la couche de surface ;
dans lequel le polymère fluoré a la formule générale (I) suivante 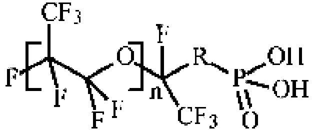
où n = 6 à 120 ; et 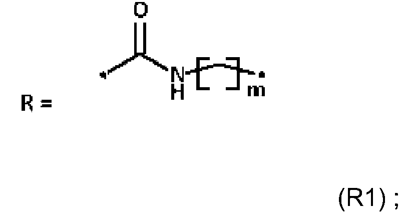 où m = 1 to 25 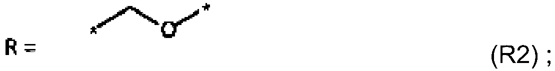 ou 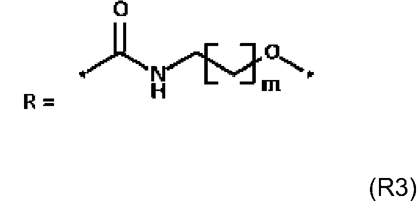 où m = 1 to 25
dans lequel l'article est une feuille antiadhésive pour un adhésif.

2. Article selon la revendication 1, dans lequel une couche de surface est disposée sur les deux surfaces principales du substrat polymère souple et un revêtement est disposé sur les deux couches de surface.

3. Article selon la revendication 1, dans lequel l'épaisseur de la couche de surface est d'une monocouche jusqu'à 15 nanomètres.

4. Article selon la revendication 1, dans lequel la couche de surface est choisie dans le groupe constitué d'aluminium, titane, nickel, chrome, alliages contenant du chrome, oxyde d'aluminium, oxyde de chrome, oxydes de nickel, oxyde de titane, oxydes de tungstène, oxyde de silicium, et combinaisons de ceux-ci.

5. Article selon la revendication 1, dans lequel l'épaisseur moyenne par unité de surface du revêtement est une épaisseur de 1 molécule.

6. Article selon la revendication 1, dans lequel au moins une surface principale du substrat polymère souple a une rugosité de surface (Ra) d'au plus 0,1 micromètre.

7. Article selon la revendication 1, dans lequel au moins une surface principale du substrat polymère souple a une rugosité de surface (Ra) d'au moins 5 micromètres.

8. Article selon la revendication 7, dans lequel la rugosité de la surface est créée par une couche de microsphères partiellement incorporées.

9. Article selon la revendication 1, dans lequel le polymère fluoré comporte des polymères pour lesquels n = 36 à 42.

10. Article selon la revendication 1, dans lequel le polymère fluoré a la formule suivante : 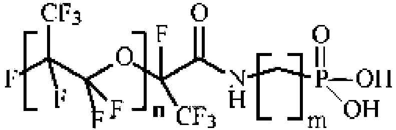 où m = 1 à 25 et n = 6 à 120.

11. Article selon la revendication 1, dans lequel le polymère fluoré a la formule suivante : 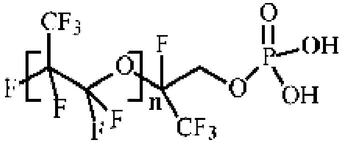 où n = 6 à 120.

12. Article selon la revendication 1, dans lequel le polymère fluoré a la formule suivante : 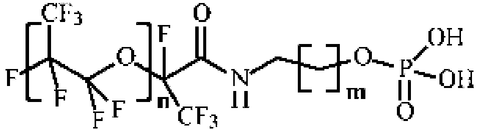 où m = 1 à 25 et n = 6 à 120.

13. Article selon la revendication 1, dans lequel la feuille antiadhésive ne contient pas de silicone.

14. Procédé de fabrication d'un article comprenant :
la fourniture d'un substrat polymère souple ayant deux surfaces principales,
le dépôt d'une couche de surface comprenant un métal, un oxyde métallique, un oxyde de silicium, ou des combinaisons de ceux-ci, sur au moins une surface principale du substrat polymère souple ; et
le dépôt d'un revêtement sur au moins une couche de surface, dans lequel le revêtement comprend un polymère fluoré lié à la couche de surface ;
dans lequel le polymère fluoré a la formule générale (I) suivante 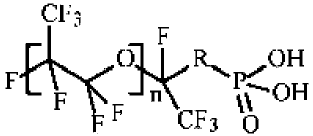
où n = 6 à 120 ; et 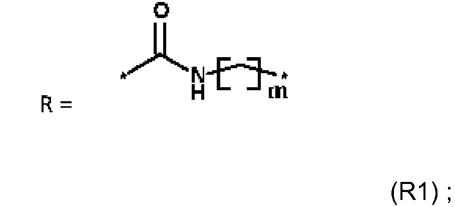 où m = 1 to 25 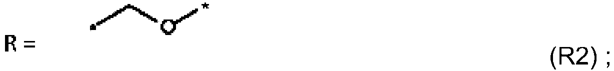 ou 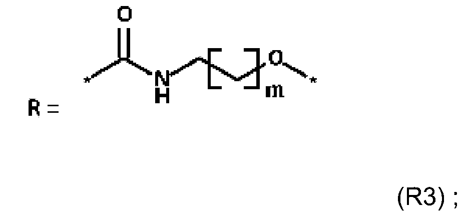 où m = 1 to 25
dans lequel l'article est une feuille antiadhésive pour un adhésif.

15. Procédé selon la revendication 15, comprenant en outre le chauffage du revêtement après son dépôt.
